# EUROPEAN PATENT SPECIFICATION

(11) **EP 2 926 987 B1**
(45) Date of publication and mention of the grant of the patent: **25.11.2020**
(21) Application number: 15151172.2
(22) Date of filing: 14.01.2015
(51) Int. Cl.: B32B 5/00

(54) **NONWOVEN INTERLAYERS MADE USING POLYMER-NANOPARTICLE POLYMERS**
VLIESSTOFFZWISCHENSCHICHTEN AUS POLYMER-NANOPARTIKELPOLYMEREN
INTERCOUCHES NON TISSÉES FABRIQUÉES AU MOYEN DE POLYMÈRES À BASE DE NANOPARTICULES POLYMÈRES

(30) Priority: 02.04.2014 US 201414243642
(43) Date of publication of application: 07.10.2015
(73) Proprietor: The Boeing Company, Chicago, IL 60606-1596 (US)
(72) Inventor: Tsotsis, Thomas Karl, Chicago, IL Illinois 60606 (US)
(74) Representative: Witte, Weller & Partner Patentanwälte mbB

(56) References cited:
- GB-A- 2 413 123
- US-A1- 2005 176 329
- US-A1- 2006 166 003
- US-A1- 2007 298 669
- US-A1- 2008 286 564
- US-A1- 2010 120 969
- US-A1- 2011 024 158

## Description

### TECHNICAL FIELD

The implementations described herein generally relate to composite structures, and more particularly, to polymer-nanoparticle-enhanced interlayers for use in composite structures.

### BACKGROUND

Fiber-reinforced-resin materials, or "composite" materials as they are commonly known, are frequently used for aerospace, automotive and marine applications because of high strength-to-weight ratios, corrosion resistance, and other favorable properties. Conventional composite materials typically include glass, carbon, or polyaramid fiber "plies" in woven and/or non-woven configurations. The fiber plies can be manufactured into composite parts by laminating them together with an uncured matrix material (e.g., an epoxy resin). The laminate can then be cured with the application of heat and/or pressure to form the finished part.

Composite parts can be manufactured from "prepreg" materials, or from dry fiber plies assembled into a "preform." Prepreg is ready-to-mold material in a cloth, mat, roving, tape or other form that has been pre-impregnated with matrix material (e.g., epoxy resin) and stored for use in an uncured or semi-cured state. The prepreg sheets are laid-up on a mold surface in the shape of the finished part. Pressure is then applied to compact the prepreg sheets, and heat can be applied to complete the curing cycle. A preform is different from a prepreg assembly in that a preform is an assembly of dry fabric and/or fibers which have been prepared for resin infusion on a mold surface. The preform plies are usually tacked and/or stitched together or otherwise stabilized to maintain their shape before and during final processing. Once the preform has been stabilized, the layers can be infused with resin using liquid-molding. The part can then be cured with the addition of pressure and/or heat.

The fiber material in composite parts provides relatively high strength in the direction of the fibers. Impact resistance, however, is generally determined by the properties of the cured matrix. One way to enhance impact resistance is to add particles of, for example, a thermoplastic material to the matrix. The thermoplastic material can inhibit crack propagation through the part resulting from, for example, foreign-object debris, which is typically not visible to the naked eye.

US 2006/166003 discloses a method for integrating carbon nanotubes into epoxy polymer composites via chemical functionalization of carbon nanotubes.

US 2008/286564 discloses a method for manufacturing a composite based on producing a plurality of carbon nanotubes on one or both sides of a substrate, and attaching the substrate to a fiber layer.

US 2007/298669 discloses polymer composites employing carbon nanotubes functionalized with organosilane species.

Another way to increase the impact resistance and fracture toughness of composite parts is to enhance the structural properties of the bond-line between alternating layers of composite materials (i.e., the interlayer properties). To date, some in industry have used interlayers or "toughening veils" inside laminate composites to enhance the structural properties of the bond-line. Specifically, the toughening veil is intended to add toughness to the components meaning the ability to absorb energy and deform without fracturing. Existing toughening veils often lack stiffness, strength and the ability to maintain compression and shear strength at elevated temperatures, especially after exposure to moisture.

Therefore there is a need for toughening veils with improved stiffness, strength and the ability to maintain compression and shear strength at elevated temperatures.

### SUMMARY

The present invention relates to a method of manufacturing a composite structure according to claim 1, the method comprising: positioning a polymer-nanoparticle-enhanced interlayer (310) adjacent to a first fiber layer (302a), wherein the polymer-nanoparticle-enhanced interlayer comprises:at least one polymer (304); and derivatized nanoparticles (306) included in the molecular backbone of the at least one polymer, wherein the nanoparticles are derivatized to include one or more functional groups; and positioning a second fiber layer (302b) adjacent to the polymer-nanoparticle-enhanced interlayer characterized in that the polymer-nanoparticle-enhanced interlayer (310) is produced by:mixing at least one monomer with the derivatized nanoparticles; and melt spinning the polymer and derivatized nanoparticles to form the polymer-nanoparticle-enhanced interlayer,wherein the polymer is in form of thermoplastic fibers selected from the group consisting of polyamide, polyimide, polyamideimide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate and polyethylene terephthalate, wherein the nanoparticles have an average particle size of less than one micrometer and are present in the amount of 0.001 to 10 wt.-% based on the total weight of the polymer-nanoparticle-enhanced interlayer.

The invention further relates to a laminate composite structure according to claim 9, comprising: a first fiber layer (302a);a second fiber layer (302b); and a polymer-nanoparticle-enhanced interlayer (310) positioned between the first fiber layer and the second fiber layer, wherein the interlayer includes: at least one polymer (304); and derivatized nanoparticles (306) included in the molecular backbone of the at least one polymer, wherein the nanoparticles are derivatized to include one or more functional groups;resin infused into the first and second fiber layers, characterized in that the derivatized nanoparticles (306) are included in the molecular backbone of the at least one polymer by mixing at least one monomer with the derivatized nanoparticles (306); and melt spinning the polymer and derivatized nanoparticles to form the polymer-nanoparticle-enhanced interlayer,wherein the polymer is in form of thermoplastic fibers selected from the group consisting of polyamide, polyimide, polyamideimide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate and polyethylene terephthalate,wherein the nanoparticles have an average particle size of less than one micrometer and are present in the amount of 0.001 to 10 wt.-% based on the total weight of the polymer-nanoparticle-enhanced interlayer. Further, preferred embodiments are covered by the dependent claims.

The features, functions, and advantages that have been discussed can be achieved independently in various implementations or may be combined in yet other implementations, further details of which can be seen with reference to the following description and drawings.

### BRIEF DESCRIPTION OF ILLUSTRATIONS

So that the manner in which the above-recited features of the present disclosure can be understood in detail, a more particular description of the disclosure, briefly summarized above, may be had by reference to implementations, some of which are illustrated in the appended drawings. It is to be noted, however, that the appended drawings illustrate only typical implementations of this disclosure and are therefore not to be considered limiting of its scope, for the disclosure may admit to other equally effective implementations.
FIG. 1 illustrates a flow diagram of an exemplary aircraft production and service method;
FIG. 2 illustrates a block diagram of an exemplary aircraft;
FIG. 3A illustrates a cross-sectional side view of a polymer-nanoparticle-enhanced interlayer assembly attached to a fiber layer in accordance with an implementation described herein;
FIG. 3B illustrates an enlarged, cross-sectional side view of the polymer-nanoparticle-enhanced interlayer assembly of FIG. 3A;
FIG. 4 illustrates a cross-sectional side view of a polymer-nanoparticle-enhanced interlayer assembly attached to a fiber layer in accordance with another implementation described herein;
FIG. 5 illustrates a partially cut-away isometric view of the polymer-nanoparticle-enhanced interlayer assembly of FIG. 3A;
FIG. 6A illustrates an isometric view of a first composite laminate having a polymer-nanoparticle-enhanced interlayer assembly configured in accordance with an implementation described herein;
FIG. 6B illustrates an isometric view of a second composite laminate having a polymer-nanoparticle-enhanced interlayer assembly configured in accordance with another implementation described herein;
FIG. 7 illustrates an enlarged, cross-sectional isometric view of a portion of the composite laminates of FIG. 6A and FIG. 6B;
FIG. 8 is a flow diagram illustrating a method for manufacturing composite parts in accordance with an implementation of the disclosure; and
FIG. 9 is a flow diagram illustrating a method of manufacturing a composite structure in accordance with another implementation of the disclosure.

To facilitate understanding, identical reference numerals have been used, wherever possible, to designate identical elements that are common to the Figures. Additionally, elements of one implementation may be advantageously adapted for utilization in other implementations described herein.

### DETAILED DESCRIPTION

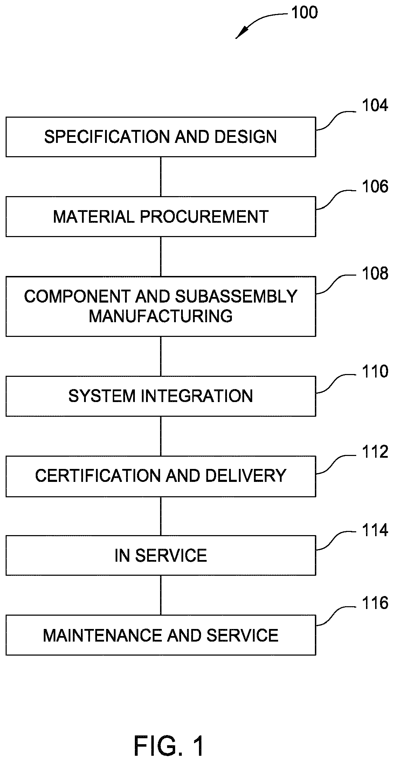

The following disclosure describes polymer-nanoparticle-enhanced interlayers for composite structures, methods for producing polymer-nanoparticle-enhanced interlayers, and methods for manufacturing composite parts for aircraft and other structures with polymer-nanoparticle-enhanced interlayers. Certain details are set forth in the following description and in FIGS. 1A-9 to provide a thorough understanding of various implementations of the disclosure. Other details describing well-known structures and systems often associated with composite parts and composite part manufacturing are not set forth in the following disclosure to avoid unnecessarily obscuring the description of the various implementations.

Many of the details, dimensions, angles and other features shown in the Figures are merely illustrative of particular implementations. In addition, further implementations of the disclosure can be practiced without several of the details described below.

The implementations described herein generally relate to composite structures, and more particularly, to polymer-nanoparticle-enhanced interlayer for use in composite structures. Compression-strength retention in composites toughened from nonwoven veils has been lower than desired, primarily due to large decreases in stiffness with increasing temperature in the veil. It is believed that a veil polymer with increased stiffness and/or improved stiffness retention with increasing temperature will improve property retention while still providing increased toughness against impact. Polymers without stiff chain segments tend to soften significantly with increasing temperature. Polymers made with stiff backbones to improve their property retention with temperature generally are very difficult to process except at very high temperatures and, even in most cases, the ability to process may be very low. Incorporation of functionalized, stiff, nanoscale particles directly into the polymer chain used for producing nonwoven toughening veils should provide a balance of improved stiffness and processability to provide the desired properties of improved toughness with minimal adverse effects on other composite properties. It is believed that only a very small amount of functionalized nanoparticles is required to stiffen the polymers as incorporation of such particles directly into the polymer backbone should increase stiffness above what would be expected from the rule of mixtures because the stiffness is imparted directly, not through van der Waals interactions with the nanoparticles.

Certain implementations described herein provide polymers for use in fabricating nonwoven toughening veils. The polymers are formed from a mixture of one or more monomers with functionalized nanoparticles to provide increased stiffness and strength relative to polymers without the incorporation of nanoparticles. This increased stiffness provides improved composite material property retention, especially compression and shear strengths at elevated temperatures, for composites toughened with polymer-based nonwoven fabrics. This improvement allows for improved toughness while minimizing the reduction in other properties that occurs using conventional toughening methods.

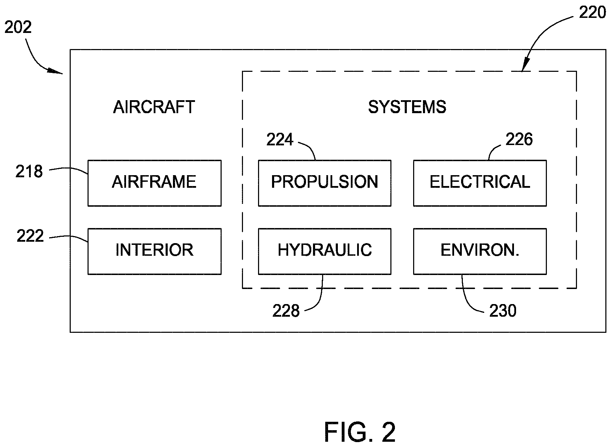

Referring more particularly to the drawings, implementations of the disclosure may be described in the context of an aircraft manufacturing and service method 100 as shown in FIG. 1 and an aircraft 202 as shown in FIG. 2. During pre-production, method 100 may include specification and design 104 of the aircraft 202 and material procurement 106. During production, component and subassembly manufacturing 108 and system integration 110 of the aircraft 202 takes place. Thereafter, the aircraft 202 may go through certification and delivery 112 in order to be placed in service 114. While in service by a customer, the aircraft 202 is scheduled for routine maintenance and service 116 (which may include modification, reconfiguration, refurbishment, and so on).

Each of the processes of method 100 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in FIG. 2, the aircraft 202 produced by exemplary method 100 may include an airframe 218 with a plurality of systems 220 and an interior 222. Examples of high-level systems 220 include one or more of a propulsion system 224, an electrical system 226, a hydraulic system 228, and an environmental system 230.

Apparatus and methods embodied herein may be employed during any one or more of the stages of the production and service method 100. For example, components or subassemblies corresponding to production process 108 may be fabricated or manufactured in a manner similar to components or subassemblies produced while the aircraft 202 is in service. Also, one or more apparatus implementations, method implementations, or a combination thereof may be utilized during the production stages 108 and 110, for example, by substantially expediting assembly of or reducing the cost of an aircraft 202. Similarly, one or more of apparatus implementations, method implementations, or a combination thereof may be utilized while the aircraft 202 is in service, for example and without limitation, to maintenance and service 116.

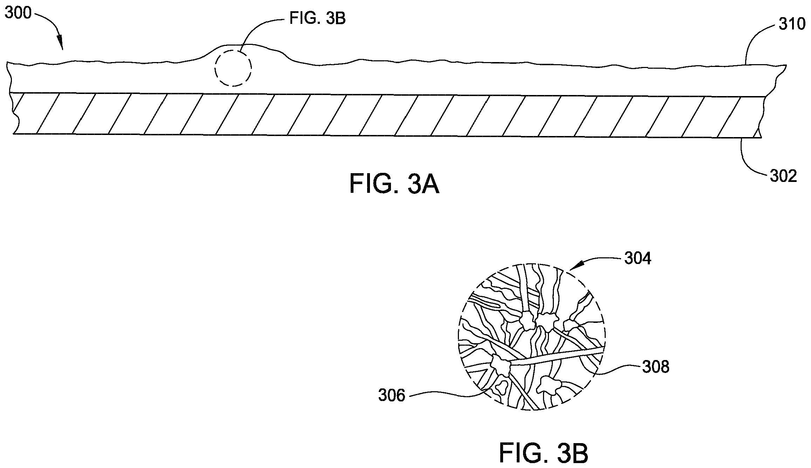

FIG. 3A illustrates a cross-sectional side view of a polymer-nanoparticle-enhanced interlayer assembly 300. In the illustrated implementation, the polymer-nanoparticle-enhanced interlayer assembly 300 includes a polymer-nanoparticle-enhanced interlayer 310 attached to a fiber layer 302. The fiber layer 302 can include various types of fiber materials known in the art including unidirectional, woven, nonwoven, braided, and/or warp-knit fibers (e.g., carbon, glass, polyaramide) in multiple orientations. For example, in one implementation, the fiber layer 302 can include carbon fibers in a bidirectional weave. In another implementation, the fiber layer 302 can include unidirectional carbon fibers.

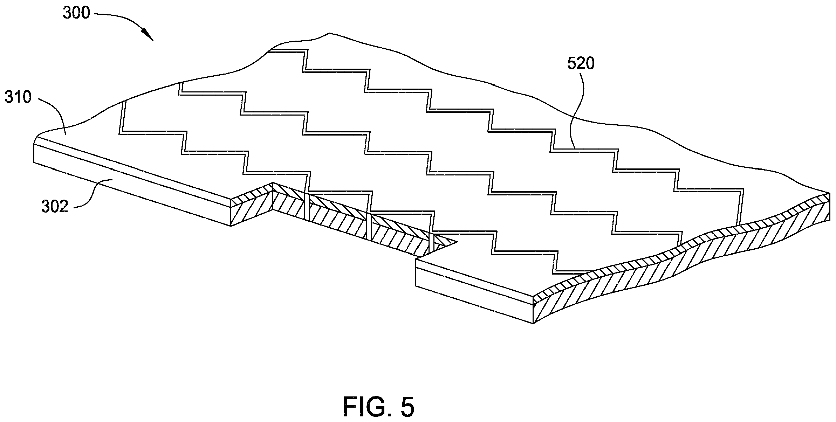

In some implementations, the polymer-nanoparticle-enhanced interlayer 310 may be attached to the fiber layer 302 using mechanical means. Exemplary mechanical means include stitching as described below with regards to FIG. 5. Various methods for stitching the polymer-nanoparticle-enhanced interlayer 310 to the fiber layer 302 are described in detail in U.S. Patent No. 8,246,882.

In some implementations, the polymer-nanoparticle-enhanced interlayer 310 may be directly attached to the fiber layer 302 by directly bonding the polymer-nanoparticle-enhanced interlayer 310 to the fiber layer 302. Exemplary bonding methods include melt-bonding. Melt-bonding may be achieved by elevating the temperature of the polymer-nanoparticle-enhanced interlayer 310 so that at least a portion of the polymer material melts and thereby bonds to the fiber layer 302. Melt-bonding of interlayers to fiber layers is described in detail in U.S. patent application Pub. No. 2004-0219855.

FIG. 3B illustrates an enlarged, cross-sectional side view of the polymer-nanoparticle-enhanced interlayer 310 of FIG. 3A. The polymer-nanoparticle-enhanced interlayer 310 includes at least one polymer 304 with derivatized nanoparticles 306 that are derivatized to include one or more functional groups. The derivatized nanoparticles are included in the molecular backbone of the at least one polymer. The at least one polymer 304 is in the form of thermoplastic fibers that are spunbonded, spunlaced, or mesh fabric. As depicted in FIG. 3B, the derivatized nanoparticles are embedded in thermoplastic fibers 308 of the at least one polymer 304.

The polymer or thermoplastic fibers 308 may be made from two or more materials. In some implementations, the two or more materials may be used to form a bi-component fiber, tri-component fiber or higher component fiber to create the interlayer fabric.

In some implementations, the fibers making up the interlayer have diameters from about 1 to about 100 microns (e.g., from about 10 to about 75 microns; from about 10 to about 30 microns; from about 1 to about 15 microns).

In some implementations, the polymer-nanoparticle-enhanced interlayer 310 may be formed on a substrate (not shown). The substrate can include, without limitation, carbon fibers, glass fibers, ceramic fibers (e.g., alumina fibers) and/or other flexible materials that can withstand the relatively high temperatures often necessary for processing. The substrate can also include, without limitation, polyamide, polyimide, polyester, polybutadiene, polyurethane, polypropylene, polyetherimide, polysulfone, polyethersulfone, polyphenylsulfone, polyester-polyarylate (e.g., Vectran®), polyaramid (e.g., Kevlar®), polybenzoxazole (e.g., Zylon®), Viscose (e.g., Rayon®), etc. The substrate can further include a binder (e.g., a thermoplastic resin; not shown) if necessary.

The polymer-nanoparticle-enhanced interlayer 310 is formed by melt-spinning. The method of making the polymer interlayer includes mixing one or more monomers with functionalized nanoparticles. The nanoparticles are functionalized prior to mixing with the monomers while mixing the one or more monomers with the nanoparticles.

The at least one polymer may include any polymer that provides a balance of improved stiffness and processability with minimal adverse effects on other composite properties.

The thermoplastic fibers may be selected from among any type of fiber that is compatible with the thermosetting resin used to form the fiber-reinforced composite material. The thermoplastic fibers of the interlayer are selected from the group consisting of polyamide, polyimide, polyamideimide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate and polyethylene terephthalate.

Nanoparticles, from which the derivatized nanoparticles are formed, are generally particles having an average particle size of less than one micrometer (µm). As used herein "average particle size" refers to the number average particle size based on the largest linear dimension of the particle (sometimes referred to as "diameter"). Particle size, including average, maximum, and minimum particle sizes, may be determined by an appropriate method of sizing particles such as, for example, static or dynamic light scattering (SLS or DLS) using a laser light source. Nanoparticles may include both particles having an average particle size of 250 nm or less, and particles having an average particle size of greater than 250 nm to less than 1 µm (sometimes referred to in the art as "sub-micron sized" particles). In one implementation, a nanoparticle may have an average particle size of about 0.01 to about 500 nanometers (nm), specifically 0.05 to 250 nm, more specifically about 0.1 to about 150 nm, more specifically about 0.5 to about 125 nm, and still more specifically about 1 to about 75 nm. The nanoparticles may be monodisperse, where all particles are of the same size with little variation, or polydisperse, where the particles have a range of sizes and are averaged. Nanoparticles of different average particle size may be used, and in this way, the particle size distribution of the nanoparticles may be unimodal (exhibiting a single distribution), bimodal exhibiting two distributions, or multi-modal, exhibiting more than one particle size distribution.

Nanoparticles that may be used with the implementations disclosed herein include, for example, single or multiwalled nanotubes, nanographite, nanographene, graphene fibers, silica nanoparticles, carbon black, carbon fibers, and the like, and combinations thereof.

The nanoparticles used herein are derivatized to include one or more functional groups such as, for example, carboxy (e.g., carboxylic acid groups), epoxy, ether, ketone, amine, hydroxy, alkoxy, alkyl, aryl, aralkyl, alkaryl, lactone, functionalized polymeric or oligomeric groups, and the like, and combinations thereof. The nanoparticles are derivatized to introduce chemical functionality to the nanoparticle. For example, for carbon nanotubes, the surface and/or edges of the carbon nanotubes may be derivatized to increase stiffness of the polymer interlayer.

In one implementation, the nanoparticle is derivatized by, for example, amination to include amine groups, where amination may be accomplished by nitration followed by reduction, or by nucleophilic substitution of a leaving group by an amine, substituted amine, or protected amine, followed by deprotection as necessary. In another implementation, the nanoparticle can be derivatized by oxidative methods to produce an epoxy, hydroxy group or glycol group using peroxide, or by cleavage of a double bond by for example a metal-mediated oxidation such as a permanganate oxidation to form ketone, aldehyde, or carboxylic acid functional groups.

In another implementation, the nanoparticle can be further derivatized by grafting certain polymer chains to the functional groups. For example, polymer chains such as acrylic chains having carboxylic acid functional groups, hydroxy functional groups, and/or amine functional groups; polyamines such as polyethyleneamine or polyethyleneimine; and poly(alkylene glycols) such as poly(ethylene glycol) and poly(propylene glycol), may be included by reaction with functional groups.

The functional groups of the derivatized nanoparticles may be selected such that the derivatized nanoparticles will be incorporated into the polymer comprising the interlayer thereby producing a polymer chain that contains the nanoparticles within the polymer chain to impart improved properties such as higher stiffness.

The nanoparticles can also be blended in with other, more common filler particles such as carbon black, mica, clays such as e.g., montmorillonite clays, silicates, glass fiber, carbon fiber, and the like, and combinations thereof.

The nanoparticles are present in the amount of about 0.001 to about 10 wt. % based on the total weight of the polymer-nanoparticle-enhanced interlayer. In another implementation, the nanoparticles are present in the amount of about 0.01 to about 5 wt. % based on the total weight of the polymer-nanoparticle-enhanced interlayer. In yet another implementation, the nanoparticles are present in the amount of about 0.01 to about 1 wt. % based on the total weight of the polymer-nanoparticle-enhanced interlayer.

The exemplary sequence below illustrates the incorporation of derivatized nanoparticle R" into a polymer backbone, for example, the backbone of a polyamide to form an exemplary polymer-nanoparticle enhanced interlayer via a polycondensation reaction. Non-polyamide polymers may be used with appropriate modifications in nanoparticle functionalization using the same general scheme.

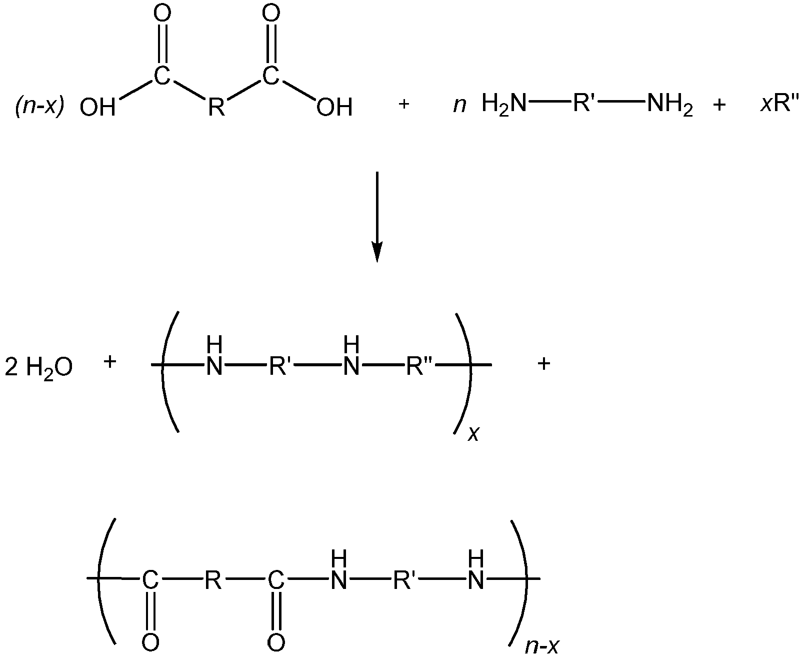

In some implementations, R and R' may be independently selected from divalent alkyls, divalent aryls, and substituted groups thereof. For example, for Nylon-6,6, R is C₄H₈ and R' is C₆H₁₂.

R" is a functionalized nanoparticle. R" may be any of the functionalized nanoparticles previously described herein. In some implementations, R" is functionalized with either amine or carboxyl groups. In some implementations R" is selected from the group of carbon black functionalized with carboxyl groups, graphene functionalized with carboxyl groups and carbon nanotubes functionalized with carboxyl groups. R" may be present in the amounts previously described herein. It is believed that addition of a small percentage of nanoparticles that have been functionalized with, for example, amine and/or carboxylic acid groups will participate in the above reaction to become part of the polymer backbone.

In some implementations x is from about 0.001 to about 10 wt. % (e.g., from about 0.01 to about 5 wt. %; from about 0.01 to 1 wt. %) based on the total weight of the polymer-nanoparticle-enhanced interlayer. n may be any percentage sufficiently high for providing a film-forming polymer.

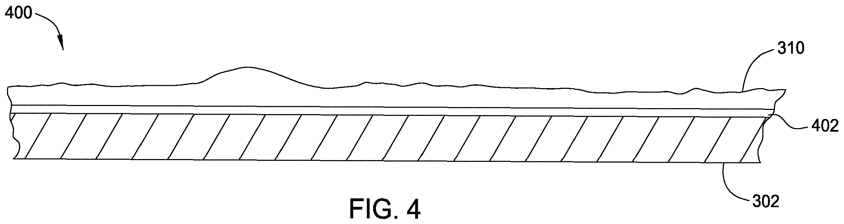

FIG. 4 illustrates a cross-sectional side view of a polymer-nanoparticle-enhanced interlayer assembly 400 in accordance with another implementation described herein. The polymer-nanoparticle-enhanced interlayer assembly 400 includes a polymer-nanoparticle-enhanced interlayer 310 attached to the fiber layer 302 via an optional bond layer 402. The bond layer 402 can include, for example, without limitation, a melt-bondable adhesive, such as a thermosetting or thermoplastic resin (e.g., a nylon-based or polyester-based resin), or other suitable adhesive known in the art.

In the illustrated implementation of FIG. 4, the polymer-nanoparticle-enhanced interlayer 310 is attached to the fiber layer 302 by bonding (e.g., by melt-bonding) the bond layer 402 to the fiber layer 302. Melt-bonding may be achieved by elevating the temperature of the bond layer 402 so that the material (e.g., the thermoplastic resin) melts and thereby bonds to the fiber layer 302.

FIG. 5 illustrates a partially cut-away isometric view of the polymer-nanoparticle-enhanced interlayer assembly 300 of FIG. 3A. In the illustrated implementation, the polymer-nanoparticle-enhanced interlayer 310 is stitched (e.g., knit-stitched or sewed) to the fiber layer 302 with thread 520. The thread 520 extends through the polymer-nanoparticle-enhanced interlayer 310 and the fiber layer 302. The stitching can be in various patterns, densities, and/or stitch-lengths depending on the nature of the fiber layer 302, the polymer-nanoparticle-enhanced interlayer 310, the thread 520. For example, in the illustrated implementation, the thread 520 forms a tricot stitch. In other implementations, however, other stitch patterns can be used including, for example, without limitation, a lock stitch, a chain stitch, etc. The thread 520 can be selected from a variety of suitable materials in various thicknesses including, for example, without limitation, polyesters, phenoxies, polyamides, and copolyamides.

The knitting or sewing step can be manually or automatically carried out prior to use of the polymer-nanoparticle-enhanced interlayer assembly 300 in a preform, or after the initial layup of the fiber layer 302 in a preform. Various methods for stitching the polymer-nanoparticle-enhanced interlayer 310 to the fiber layer 302 are described in detail in U.S. Patent No. 8,246,882. Although the polymer-nanoparticle-enhanced interlayer 310 is stitched to the fiber layer 302 with thread 520 in FIG. 5, in other implementations, the polymer-nanoparticle-enhanced interlayer 310 can be attached to the fiber layer 302 with other types of fasteners. For example, in another implementation, the polymer-nanoparticle-enhanced interlayer 310 can be attached to the fiber layer 302 with mechanical fasteners, such as, without limitation, plastic rivets, inserts, staples, etc.

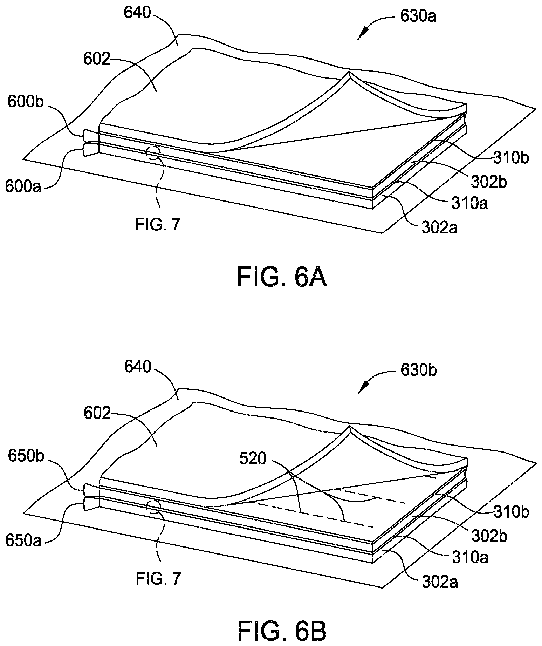

FIG. 6A is an isometric view of a first composite laminate 630a having a polymer-nanoparticle-enhanced interlayer assembly 400 configured in accordance with one implementation described herein. FIG. 6B is an isometric view of a second composite laminate 630b having a polymer-nanoparticle-enhanced interlayer assembly 300 configured in accordance with another implementation. With reference to FIG. 6A, the first composite laminate 630a includes a plurality of interlayer assemblies 600 (identified individually as a first interlayer assembly 600a and a second interlayer assembly 600b) assembled on a mold surface 640. In the illustrated implementation, the interlayer assemblies 600 are at least generally similar in structure and function to the interlayer assembly 400 described above with reference to FIG. 4. More specifically, each of the interlayer assemblies 600 includes a polymer-nanoparticle-enhanced interlayer 310 (identified individually as a first interlayer 310a and a second interlayer 310b) melt-bonded or otherwise attached to a corresponding fiber layer 302 (identified individually as a first fiber layer 302a and a second fiber layer 302b). The interlayer assemblies 600 are stacked so that they form an alternating fiber layer/interlayer/fiber layer arrangement. A third fiber layer 602a can be placed over the second interlayer assembly 600b.

Although three fiber layers and two interlayers are shown in FIG. 6A for purposes of illustration, any number of interlayers and fiber layers in various orientations (e.g., a +45/0/-45/90 orientation) can be used in accordance with the disclosure. For example various implementations can include three or more fiber layers with a corresponding polymer-nanoparticle-enhanced interlayer between each fiber layer and/or on the outside of the lay-up. In addition, the various interlayers and fiber layers can have different thicknesses, different material compositions, etc.

Once the desired number of the interlayer assemblies 600 and the fiber layer 602a has been assembled on the mold surface 640 in the desired orientations, the first composite laminate 630a can be formed into a finished composite part using a variety of liquid-molding processes known in the art. Such methods include, for example, vacuum-assisted resin transfer molding (VARTM). In VARTM, a vacuum bag is placed over the preform, and resin is infused into the preform using a vacuum-generated pressure differential. The laminate can then be placed in an autoclave, oven, etc. and heated to cure the resin. Other liquid-molding processes include resin transfer molding (RTM) and resin film infusion (RFI). In RTM, resin is infused under pressure into the preform in a closed mold. In RFI, a semi-solid resin is placed underneath or on top of the preform, and a tool is positioned on top of the laminate. The laminate assembly is then vacuum-bagged and placed in an autoclave to melt the semi-solid resin, causing it to infuse into the preform.

In another implementation, the interlayer assemblies 600 and/or the third fiber layer 602 can be impregnated with resin (i.e., "prepreg") before being placed on the mold surface 640. The part can then be cured by placing the laminate under a vacuum-bag and curing the matrix material at an elevated temperature and/or pressure. As the foregoing examples illustrate, implementations are not limited to a particular liquid-molding process, or to liquid-molding, for that matter.

Referring next to FIG. 6B, the second composite laminate 630b includes a plurality of interlayer assemblies 650 (identified individually as a first interlayer assembly 650a and a second interlayer assembly 650b) in a stacked arrangement on the mold surface 640. In the illustrated implementation, the interlayer assemblies 650 are at least generally similar in structure and function to the polymer-nanoparticle-enhanced interlayer assembly 300 described above with reference to FIGS. 3A and 3B. For example, each of the interlayer assemblies 650 includes a polymer-nanoparticle-enhanced interlayer 310 (identified individually as a first interlayer 310a and a second interlayer 310b) stitched or otherwise fastened to a corresponding fiber layer 302 (identified individually as a first fiber layer assembly 302a and a second fiber layer 302b) with the thread 520. The interlayer assemblies 650 are stacked so that they form an alternating fiber layer/interlayer/fiber layer arrangement. A third fiber layer 602b can be placed over the second interlayer assembly 650b. Although three fiber layers and two interlayers are shown in FIG. 6B for purposes of illustration, any number of interlayers and fiber layers can be used in various orientations (e.g., a 0/90/0 orientation) in accordance with the present disclosure. In addition, the various interlayers and fiber layers can have different thicknesses, different material compositions, etc.

Once the desired number of the interlayer assemblies 650 and the fiber layer 602b has been assembled on the mold surface 640, the second composite laminate 630b can be formed into a finished part using a variety of liquid-molding processes known in the art. As described above with reference to FIG. 6B, such methods can include, for example, vacuum-assisted resin transfer molding (VARTM), resin transfer molding (RTM), and resin film infusion (RFI). In another implementation, the interlayer assemblies 650 and/or the third fiber layer 602b can be infused with resin in prepreg form before being placed on the mold surface 640. Whether liquid-molding or prepreg methods are used, the second composite laminate 630b can be compacted (debulked) using vacuum pressure and then hardened by elevating the temperature and curing the matrix material.

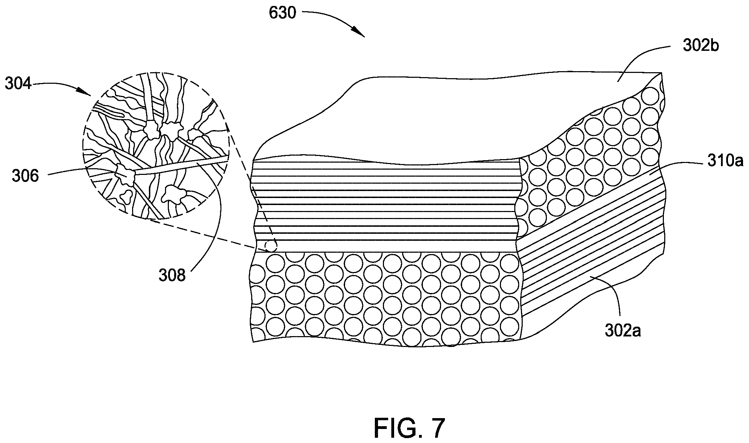

FIG. 7 illustrates an enlarged, cross-sectional isometric view of a portion of the composite laminates of FIG. 6A and FIG. 6B. As shown in FIG. 7, the polymer-nanoparticle-enhanced interlayer 310 is positioned between the two fiber layers 302. This configuration can enhance the strength of the interface between the two fiber layers 302, and thereby increase the fracture toughness and impact resistance of the finished composite part.

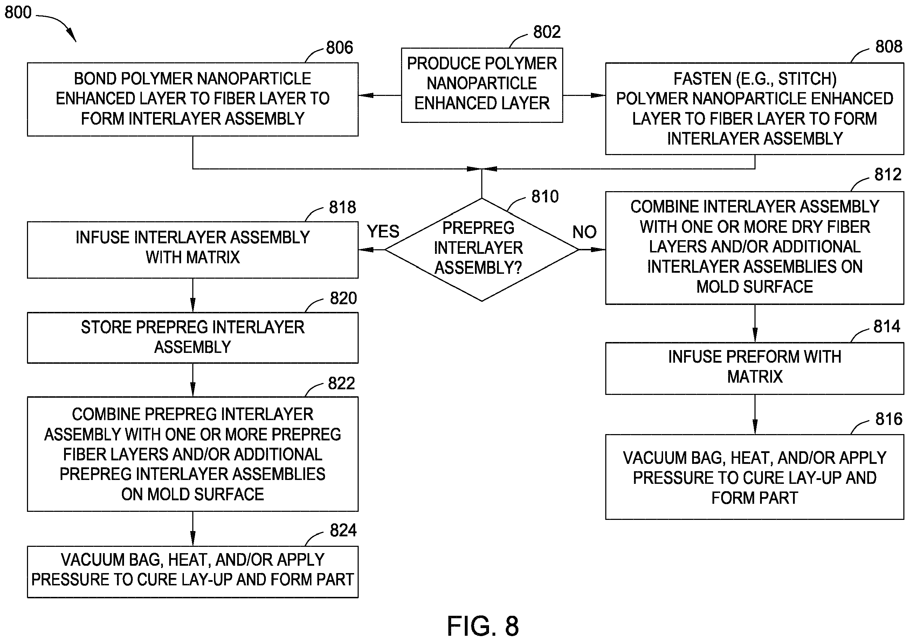

FIG. 8 is a flow diagram illustrating a method 800 for manufacturing composite part with a polymer-nanoparticle-enhanced interlayer in accordance with an implementation of the disclosure. At block 802, a polymer-nanoparticle-enhanced interlayer is produced according to implementations described herein. At block 806, the polymer-nanoparticle-enhanced interlayer is bonded (e.g., by melt-bonding) to a fiber layer to form an interlayer assembly. After block 806, the method proceeds to decision block 808.

Returning to block 802, other methods may be used to attach the polymer-nanoparticle-enhanced interlayer to the fiber layer. In some implementations, the method may proceed to block 808 where the polymer-nanoparticle-enhanced interlayer is mechanically fastened (e.g., by stitching with a thread or other suitable material) to a fiber layer to form an interlayer assembly. After block 808, the method proceeds to decision block 810.

In decision block 810, the decision is made whether to pre-impregnate the interlayer assembly with matrix (e.g., epoxy resin) and store the prepreg assembly for later use, or use the dry interlayer assembly in a preform. If the decision is made to pre-impregnate the interlayer assembly, the method proceeds to block 818 and infuses the interlayer assembly with matrix material (e.g., epoxy resin). Here, the interlayer assembly can be infused with uncured matrix material using any suitable method known in the art for preparing prepreg fiber layers. In block 820, the prepreg interlayer assembly can be stored, if desired, for an extended period of time prior to use. When the prepreg interlayer assembly is ready for use, the method proceeds to block 822 and combines the prepreg interlayer assembly with one or more prepreg fiber layers and/or one or more additional prepreg interlayer assemblies on a mold surface in a desired orientation. In block 824, the method vacuum-bags the prepreg assembly to compact the lay-up, and cures the assembly with the application of heat and/or pressure to harden composite part.

Returning to decision block 810, if the decision is made to assemble the dry interlayer assembly into a preform, the method proceeds to block 812 and combines the interlayer assembly with one or more fiber layers and/or one or more additional interlayer assemblies on the mold surface. In block 814, the method infuses the preform with matrix material using any suitable liquid-molding process known in the art. In block 816, the method evacuates the resin-infused assembly to remove air bubbles, and then cures the assembly with the application of heat and/or pressure to form the finished composite part.

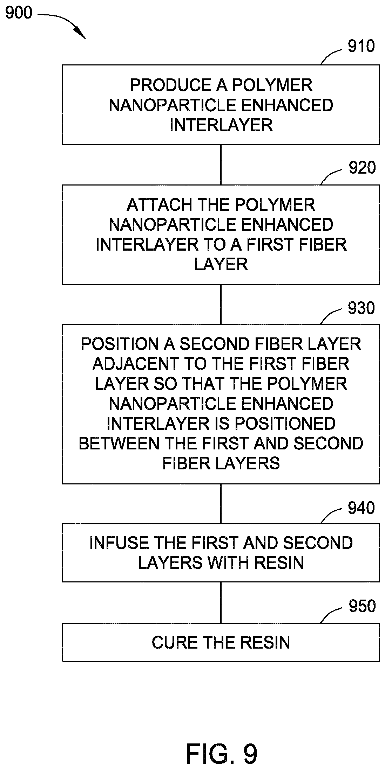

FIG. 9 is a flow diagram illustrating a method 900 for manufacturing a composite structure in accordance with another implementation of the disclosure. In block 910, the method includes producing a polymer-nanoparticle-enhanced interlayer. In block 920, the method involves attaching the polymer-nanoparticle-enhanced interlayer to a first fiber layer. In block 930, a second fiber layer is positioned adjacent to the first fiber layer so that the polymer-nanoparticle-enhanced interlayer is positioned between the first and second fiber layers. In block 940, the first and second fiber layers are infused with resin, and the resin is cured in block 950.

The methods described above can be used to manufacture composite parts for a wide variety of different structures, including aircraft structures. For example, these methods can be used to form aircraft skins, frames, stiffeners, and/or various portions thereof. The composite parts can be assembled together to form aircraft structures (e.g., fuselages, wings, tail surfaces, etc.) using adhesives, fasteners, and/or other suitable attachment methods known in the art.

The implementations described herein provide for a polymer-nanoparticle enhanced interlayer or "toughening veil" with improved stiffness, strength, and ability to retain compression and shear strength at elevated temperatures and methods of manufacturing the same. The nanoparticles in the polymer-nanoparticlc enhanced interlayer are attached directly to the polymer as opposed to bonding by weaker Van der Waals forces. Another important benefit is that the viscosity of the mixture of the one or more monomers with the functionalized nanoparticles is typically low enough to enable spinning using available methods.

While the foregoing is directed to implementations of the present disclosure, other and further implementations of the disclosure may be devised without departing from the basic scope thereof, and the scope thereof is determined by the claims that follow.

## Claims

1. A method of manufacturing a composite structure, the method comprising:
positioning a polymer-nanoparticle-enhanced interlayer (310) adjacent to a first fiber layer (302a), wherein the polymer-nanoparticle-enhanced interlayer comprises:
at least one polymer (304); and
derivatized nanoparticles (306) included in the molecular backbone of the at least one polymer, wherein the nanoparticles are derivatized to include one or more functional groups; and
positioning a second fiber layer (302b) adjacent to the polymer-nanoparticle-enhanced interlayer **characterized in that** the polymer-nanoparticle-enhanced interlayer (310) is produced by:
mixing at least one monomer with the derivatized nanoparticles; and
melt spinning the polymer and derivatized nanoparticles to form the polymer-nanoparticle-enhanced interlayer,
wherein the polymer is in form of thermoplastic fibers selected from the group consisting of polyamide, polyimide, polyamideimide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate and polyethylene terephthalate,
wherein the nanoparticles have a number average particle size of less than one micrometer determined according to the description and are present in the amount of 0.001 to 10 wt.-% based on the total weight of the polymer-nanoparticle-enhanced interlayer.

2. The method of claim 1, further comprising:
infusing the first fiber layer (302a) and the second fiber layer (302b) with resin; and
curing the resin to harden the composite structure.

3. The method of claim 2, wherein the at least one polymer is in the form of thermoplastic fibers, and wherein the one or more functional groups form bonds with the resin.

4. The method of any preceding claim, wherein the nanoparticles are selected from the group consisting of: single or multiwalled nanotubes, nanographite, nanographene, graphene fibers, silica nanoparticles, carbon black, carbon fibers and combinations thereof, and wherein the one or more functional groups are selected from the group of functional groups consisting of: amine, carboxy, hydroxy, epoxy, ether, ketone, alkoxy, aryl, aralkyl, lactone, functionalized polymeric or oligomeric groups, or combinations thereof.

5. The method of any preceding claim, wherein the derivatized nanoparticles (306) are single or multi-walled nanotubes with amine or carboxy functional groups.

6. The method of any of claims 1 to 5, wherein positioning a polymer-nanoparticle-enhanced interlayer (310) adjacent to a first fiber layer (302a) comprises heating the polymer-nanoparticle-enhanced interlayer and the first fiber layer to melt-bond the polymer-nanoparticle-enhanced interlayer to the first fiber layer.

7. The method of any of claims 1 to 5, wherein positioning a polymer-nanoparticle-enhanced interlayer (310) adjacent to a first fiber layer (302a) comprises stitching the polymer-nanoparticle-enhanced interlayer to the first fiber layer.

8. The method of any of claim 2 to 7, further comprising infusing the polymer-nanoparticle-enhanced interlayer (310) with resin and wherein infusing the first and second fiber layers and the polymer-nanoparticle-enhanced interlayer with resin includes preimpregnating the polymer-nanoparticle-enhanced interlayer and the first fiber layer with a first portion of resin, and preimpregnating the second fiber layer with a second portion of resin, before positioning the second fiber layer adjacent the polymer-nanoparticle-enhanced interlayer.

9. A laminate composite structure, comprising:
a first fiber layer (302a);
a second fiber layer (302b); and
a polymer-nanoparticle-enhanced interlayer (310) positioned between the first fiber layer and the second fiber layer, wherien the interlayer includes:
at least one polymer (304); and
derivatized nanoparticles (306) included in the molecular backbone of the at least one polymer, wherein the nanoparticles are derivatized to include one or more functional groups;
resin infused into the first and second fiber layers, **characterized in that**
the derivatized nanoparticles (306) are included in the molecular backbone of the at least one polymer by mixing at least one monomer with the derivatized nanoparticles (306); and melt spinning the polymer and derivatized nanoparticles to form the polymer-nanoparticle-enhanced interlayer,
wherein the polymer is in form of thermoplastic fibers selected from the group consisting of polyamide, polyimide, polyamideimide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate and polyethylene terephthalate,
wherein the nanoparticles have a number average particle size of less than one micrometer determined according to the description and are present in the amount of 0.001 to 10 wt.-% based on the total weight of the polymer-nanoparticle-enhanced interlayer.

10. The composite structure of claim 9, wherein the at least one polymer is in the form of thermoplastic fibers, and wherein the one or more functional groups form bonds with the resin.

11. The composite structure of any of claims 9 to 10, wherein the nanoparticles are selected from the group consisting of: single or multiwalled nanotubes, nanographite, nanographene, graphene fibers, silica nanoparticles, carbon black, carbon nanofiber and combinations thereof.

12. The composite structure of any of claims 9 to 11, wherein the one or more functional groups are selected from the group of functional gropus consisting of: amine, carboxy, hydroxy, epoxy, ether, ketone, alkoxy, aryl, aralkyl, lactone, functionalized polymeric or oligomeric groups, or combinations thereof.

13. The composite structure of any of claims 9 to 12, wherein the first fiber layer (302a) and the second fiber layer (302b) are nonwoven fiber layers and wherein the polymer-nanoparticle-enhanced interlayer (310) is a nonwoven synthetic polymer fabric.

14. The composite structure of any of claims 9 to 13, wherein the polymer-nanoparticle-enhanced interlayer (310) is at least one of: melt-bonded to the first fiber layer (302a) , or mechanically fastened to the first fiber layer.

## Patentansprüche

1. Verfahren zur Herstellung einer Verbundstruktur, wobei das Verfahren aufweist:
Positionieren einer Polymernanopartikel-verstärkten Zwischenschicht (310) benachbart zu einer ersten Faserschicht (302a), wobei die Polymernanopartikel-verstärkte Zwischenschicht aufweist:
mindestens ein Polymer (304); und
derivatisierte Nanopartikel (306), die in dem molekularen Grundgerüst des mindestens einen Polymers enthalten sind, wobei die Nanopartikel derivatisiert sind, um eine oder mehrere funktionelle Gruppen einzuschließen; und
Positionieren einer zweiten Faserschicht (302b) benachbart zu der Polymernanopartikel-verstärkten Zwischenschicht, **dadurch gekennzeichnet, dass** die Polymernanopartikel-verstärkte Zwischenschicht (310) hergestellt wird durch:
Mischen mindestens eines Monomers mit den derivatisierten Nanopartikeln; und
Schmelzspinnen des Polymers und derivatisierter Nanopartikel zur Bildung der Polymernanopartikel-verstärkten Zwischenschicht,
wobei das Polymer in Form von thermoplastischen Fasern vorliegt, ausgewählt aus der Gruppe bestehend aus Polyamid, Polyimid, Polyamidimid, Polyester, Polybutadien, Polyurethan, Polypropylen, Polyetherimid, Polysulfon, Polyethersulfon, Polyphenylsulfon, Polyphenylensulfid, Polyetherketon, Polyarytheron, Polyphenylenether, Polybutylenterephthalat und Polyethylenterephthalat,
wobei die Nanopartikel eine zahlenmittlere Partikelgröße von weniger als einem Mikrometer bestimmt gemäß der Beschreibung aufweisen und in einer Menge von 0,001 bis 10 Gew .-% vorliegen, bezogen auf das Gesamtgewicht der mit Polymernanopartikeln verstärkten Zwischenschicht.

2. Verfahren nach Anspruch 1, des Weiteren aufweisend:
Infundieren der ersten Faserschicht (302a) und der zweiten Faserschicht (302b) mit Harz; und
Härten des Harzes zum Aushärten der Verbundstruktur.

3. Verfahren nach Anspruch 2, wobei das mindestens eine Polymer in Form von thermoplastischen Fasern vorliegt und wobei die eine oder mehreren funktionellen Gruppen Bindungen mit dem Harz ausbilden.

4. Verfahren nach einem der vorhergehenden Ansprüche, wobei die Nanopartikel ausgewählt sind aus der Gruppe bestehend aus: ein- oder mehrwandigen Nanoröhren, Nanographit, Nanographen, Graphenfasern, Siliciumdioxid-Nanopartikeln, Ruß, Kohlenstofffasern und Kombinationen davon, und wobei das eine oder die mehreren funktionelle Gruppen sind ausgewählt aus der Gruppe der funktionellen Gruppen, bestehend aus: Amin, Carboxy, Hydroxy, Epoxid, Ether, Keton, Alkoxid, Aryl, Aralkyl, Lacton, funktionalisierten polymeren oder oligomeren Gruppen oder Kombinationen davon.

5. Verfahren nach einem der vorhergehenden Ansprüche, wobei die derivatisierten Nanopartikel (306) ein- oder mehrwandige Nanoröhren mit funktionellen Amin- oder Carboxygruppen sind.

6. Verfahren nach einem der Ansprüche 1 bis 5, wobei das Positionieren einer Polymernanopartikel-verstärkten Zwischenschicht (310) benachbart zu einer ersten Faserschicht (302a) das Erhitzen der Polymernanopartikel-verstärkten Zwischenschicht und der ersten Faserschicht zum Schmelzverbinden der mit Polymernanopartikeln verstärkten Zwischenschicht mit der ersten Faserschicht.

7. Verfahren nach einem der Ansprüche 1 bis 5, wobei das Positionieren einer mit Polymernanopartikeln verstärkten Zwischenschicht (310) benachbart zu einer ersten Faserschicht (302a) das Nähen der mit Polymernanopartikeln verstärkten Zwischenschicht an die erste Faserschicht aufweist.

8. Verfahren nach einem der Ansprüche 2 bis 7, des Weiteren mit dem Infundieren der mit Polymernanopartikeln verstärkten Zwischenschicht (310) mit Harz, und wobei das Infundieren der ersten und der zweiten Faserschicht und der mit Polymernanopartikeln verstärkten Zwischenschicht mit Harz das Vorimprägnieren der Polymernanopartikel-verstärkten Zwischenschicht und der ersten Faserschicht mit einer ersten Harzmenge aufweist und das Vorimprägnieren der zweiten Faserschicht mit einer zweiten Harzmenge aufweist, bevor die zweite Faserschicht neben der Polymernanopartikel-verstärkten Zwischenschicht positioniert wird.

9. Laminatverbundstruktur, mit:
einer ersten Faserschicht (302a);
einer zweiten Faserschicht (302b); und
einer Polymernanopartikel-verstärkten Zwischenschicht (310), die zwischen der ersten Faserschicht und der zweiten Faserschicht positioniert ist, wobei die Zwischenschicht aufweist:
mindestens ein Polymer (304); und
derivatisierte Nanopartikel (306), die im molekularen Grundgerüst des mindestens einen Polymers enthalten sind, wobei die Nanopartikel derivatisiert sind, um eine oder mehrere funktionelle Gruppen einzuschließen;
in die erste und zweite Faserschicht infundiertes Harz, **dadurch gekennzeichnet, dass**
die derivatisierten Nanopartikel (306) in dem molekularen Grundgerüst des mindestens einen Polymers vorgesehen sind durch Mischen von mindestens einem Monomer mit den derivatisierten Nanopartikeln (306); und Schmelzspinnen des Polymers und der derivatisierten Nanopartikel, um die Polymernanopartikel-verstärkte Zwischenschicht auszubilden,
wobei das Polymer in Form von thermoplastischen Fasern vorliegt, die ausgewählt sind aus der Gruppe bestehend aus Polyamid, Polyimid, Polyamidimid, Polyester, Polybutadien, Polyurethan, Polypropylen, Polyetherimid, Polysulfon, Polyethersulfon, Polyphenylsulfon, Polyphenylensulfid, Polyetherketon, Polyarytheron Polyphenylenether, Polybutylenterephthalat und Polyethylenterephthalat,
wobei die Nanopartikel eine zahlenmittlere Partikelgröße von weniger als einem Mikrometer bestimmt gemäß der Beschreibung aufweisen und in einer Menge von 0,001 bis 10 Gew .-% vorliegen, bezogen auf das Gesamtgewicht der mit Polymernanopartikeln verstärkten Zwischenschicht.

10. Verbundstruktur nach Anspruch 9, wobei das mindestens eine Polymer in Form von thermoplastischen Fasern vorliegt und wobei die eine oder mehreren funktionellen Gruppen Bindungen mit dem Harz bilden.

11. Verbundstruktur nach einem der Ansprüche 9 bis 10, wobei die Nanopartikel ausgewählt sind aus der Gruppe bestehend aus: ein- oder mehrwandigen Nanoröhren, Nanographit, Nanographen, Graphenfasern, Silica-Nanopartikeln, Ruß, Kohlenstoffnanofaser und Kombinationen davon.

12. Verbundstruktur nach einem der Ansprüche 9 bis 11, wobei die eine oder mehreren funktionellen Gruppen ausgewählt sind aus der Gruppe von funktionellen Gruppen bestehend aus: Amin, Carboxy, Hydroxy, Epoxid, Ether, Keton, Alkoxid, Aryl, Aralkyl, Lacton, funktionalisierten polymeren oder oligomeren Gruppen oder Kombinationen davon.

13. Verbundstruktur nach einem der Ansprüche 9 bis 12, wobei die erste Faserschicht (302a) und die zweite Faserschicht (302b) Vliesfaserschichten sind, und wobei die Polymernanopartikel-verstärkte Zwischenschicht (310) ein synthetischer Vliespolymerstoff ist.

14. Verbundstruktur nach einem der Ansprüche 9 bis 13, wobei die Polymernanopartikel-verstärkte Zwischenschicht (310) mindestens eines ist von: schmelzgebunden an die erste Faserschicht (302a), oder mechanisch an der ersten Faserschicht befestigt.

## Revendications

1. Procédé de fabrication d'une structure composite, le procédé comprenant :
la disposition d'une intercouche améliorée par du polymère et des nanoparticules (310) de manière adjacente à une première couche de fibres (302a), l'intercouche améliorée par du polymère et des nanoparticules comprenant :
au moins un polymère (304) ; et
des nanoparticules chimiquement modifiées (306) incluses dans la chaîne principale moléculaire de l'au moins un polymère, les nanoparticules étant chimiquement modifiées pour inclure un ou plusieurs groupes fonctionnels ; et
la disposition d'une seconde couche de fibres (302b) de manière adjacente à l'intercouche améliorée par du polymère et des nanoparticules,
**caractérisé en ce que** l'intercouche améliorée par du polymère et des nanoparticules (310) est produite par :
mélange d'au moins un monomère avec les nanoparticules chimiquement modifiées ; et
filage par voie fondue du polymère et des nanoparticules chimiquement modifiées pour former l'intercouche améliorée par du polymère et des nanoparticules,
dans lequel le polymère est sous forme de fibres thermoplastiques choisies dans le groupe constitué par du polyamide, du polyimide, du polyamideimide, du polyester, du polybutadiène, du polyuréthane, du polypropylène, du polyétherimide, de la polysulfone, de la polyéthersulfone, de la polyphénylsulfone, du poly(sulfure de phénylène), de la polyéthercétone, de la polyétheréthercétone, du polyarylamide, de la polycétone, du polyphtalamide, du poly(oxyde de phénylène), du poly(téréphtalate de butylène) et du d'éthylène),
dans lequel les nanoparticules ont une taille moyenne de particule en nombre déterminée selon la description inférieure à un micromètre et sont présentes en quantité de 0,001 à 10 % en poids par rapport au poids total de l'intercouche améliorée par du polymère et des nanoparticules.

2. Procédé selon la revendication 1, comprenant en outre :
l'imprégnation de la première couche de fibres (302a) et de la seconde couche de fibres (302b) avec de la résine ; et
le durcissement de la résine pour faire durcir la structure composite.

3. Procédé selon la revendication 2, dans lequel l'au moins un polymère est sous la forme de fibres thermoplastiques et dans lequel le ou les groupes fonctionnels forment des liaisons avec la résine.

4. Procédé selon une quelconque revendication précédente, dans lequel les nanoparticules sont choisies dans le groupe constitué par : des nanotubes mono-parois ou multi-parois, du nanographite, du nanographène, des fibres de graphène, des nanoparticules de silice, du noir de carbone, des fibres de carbone et des associations de ceux-ci et dans lequel le ou les groupes fonctionnels sont choisis dans le groupe de groupes fonctionnels constitué par : les groupes aminé, carboxy, hydroxy, époxy, éther, cétone, alcoxy, aryle, aralkyle, lactone, les groupes polymères ou oligomères fonctionnalisés ou des associations de ceux-ci.

5. Procédé selon une quelconque revendication précédente, dans lequel les nanoparticules chimiquement modifiées (306) sont des nanotubes mono-parois ou multi-parois portant des groupes fonctionnels amine ou carboxy.

6. Procédé selon l'une quelconque des revendications 1 à 5, dans lequel la disposition d'une intercouche améliorée par du polymère et des nanoparticules (310) de manière adjacente à une première couche de fibres (302a) comprend le chauffage de l'intercouche améliorée par du polymère et des nanoparticules et de la première couche de fibres pour lier par voie fondue l'intercouche améliorée par du polymère et des nanoparticules à la première couche de fibres.

7. Procédé selon l'une quelconque des revendications 1 à 5, dans lequel la disposition d'une intercouche améliorée par du polymère et des nanoparticules (310) de manière adjacente à une première couche de fibres (302a) comprend le piquage de l'intercouche améliorée par du polymère et des nanoparticules sur la première couche de fibres.

8. Procédé selon l'une quelconque des revendications 2 à 7, comprenant en outre l'imprégnation de l'intercouche améliorée par du polymère et des nanoparticules (310) avec de la résine et dans lequel l'imprégnation des première et seconde couches de fibres et de l'intercouche améliorée par du polymère et des nanoparticules avec de la résine inclut la pré-imprégnation de l'intercouche améliorée par du polymère et des nanoparticules et de la première couche de fibres avec une première portion de résine et la pré-imprégnation de la seconde couche de fibres avec une seconde portion de résine, avant la disposition de la seconde couche de fibres de manière adjacente à l'intercouche améliorée par du polymère et des nanoparticules.

9. Structure composite stratifiée, comprenant :
une première couche de fibres (302a) ;
une seconde couche de fibres (302b) ; et
une intercouche améliorée par du polymère et des nanoparticules (310) disposée entre la première couche de fibres et la seconde couche de fibres,
dans laquelle l'intercouche inclut :
au moins un polymère (304) ; et
des nanoparticules chimiquement modifiées (306) incluses dans la chaîne principale moléculaire de l'au moins un polymère, les nanoparticules étant chimiquement modifiées pour inclure un ou plusieurs groupes fonctionnels ;
de la résine imprégnée dans les première et seconde couches de fibres, **caractérisée en ce que**
les nanoparticules chimiquement modifiées (306) sont incluses dans la chaîne principale moléculaire de l'au moins un polymère par mélange d'au moins un monomère avec les nanoparticules chimiquement modifiées (306) ; et filage par voie fondue du polymère et des nanoparticules chimiquement modifiées pour former l'intercouche améliorée par du polymère et des nanoparticules,
dans laquelle le polymère est sous forme de fibres thermoplastiques choisies dans le groupe constitué par du polyamide, du polyimide, du polyamideimide, du polyester, du polybutadiène, du polyuréthane, du polypropylène, du polyétherimide, de la polysulfone, de la polyéthersulfone, de la polyphénylsulfone, du poly(sulfure de phénylène), de la polyéthercétone, de la polyétheréthercétone, du polyarylamide, de la polycétone, du polyphtalamide, du poly(oxyde de phénylène), du de butylène) et du d'éthylène),
dans laquelle les nanoparticules ont une taille moyenne de particule en nombre déterminée selon la description inférieure à un micromètre et sont présentes en quantité de 0,001 à 10 % en poids par rapport au poids total de l'intercouche améliorée par du polymère et des nanoparticules.

10. Structure composite selon la revendication 9, dans laquelle l'au moins un polymère est sous la forme de fibres thermoplastiques et dans laquelle le ou les groupes fonctionnels forment des liaisons avec la résine.

11. Structure composite selon l'une quelconque des revendications 9 à 10, dans laquelle les nanoparticules sont choisies dans le groupe constitué par : des nanotubes mono-parois ou multi-parois, du nanographite, du nanographène, des fibres de graphène, des nanoparticules de silice, du noir de carbone, une nanofibre de carbone et des associations de ceux-ci.

12. Structure composite selon l'une quelconque des revendications 9 à 11, dans laquelle le ou les groupes fonctionnels sont choisis dans le groupe de groupes fonctionnels constitué par : les groupes aminé, carboxy, hydroxy, époxy, éther, cétone, alcoxy, aryle, aralkyle, lactone, les groupes polymères ou oligomères fonctionnalisés ou des associations de ceux-ci.

13. Structure composite selon l'une quelconque des revendications 9 à 12, dans laquelle la première couche de fibres (302a) et la seconde couche de fibres (302b) sont des couches de fibres non tissées et dans laquelle l'intercouche améliorée par du polymère et des nanoparticules (310) est un non-tissé de polymère synthétique.

14. Structure composite selon l'une quelconque des revendications 9 à 13, dans laquelle l'intercouche améliorée par du polymère et des nanoparticules (310) est : liée par voie fondue à la première couche de fibres (302a) et/ou mécaniquement attachée à la première couche de fibres.
